# EUROPEAN PATENT APPLICATION

(11) **EP 3 277 012 A1**
(43) Date of publication of application: **31.01.2018**
(21) Application number: 15890257.7
(22) Date of filing: 29.04.2015
(51) Int. Cl.: H04W 16/10

(54) **CELL POWER SHARING AND ADJUSTING METHOD AND BASE STATION**

(71) Applicant: Huawei Technologies Co., Ltd., Longgang District Shenzhen, Guangdong 518129 (CN)
(72) Inventor: SHEN, Qiang, Shenzhen Guangdong 518129 (CN); LI, Chunguang, Shenzhen Guangdong 518129 (CN); LU, Peng, Shenzhen Guangdong 518129 (CN)
(74) Representative: Goddar, Heinz J.
(86) International application number: PCT/CN2015/077802
(87) International publication number: WO 2016/172877

(57) **Abstract**

The present invention provides cell power sharing and adjustment methods and a base station. A transmit power consumption status of each cell in a current period is estimated according to a specific service status of each cell in the current data transmission period, and further a transmit power of the cell is adaptively adjusted, so that a transmit power allocated to each cell can better adapt to a service requirement of the cell. This increases a cell throughput rate. In addition, a remaining transmit power of each cell after completion of cell scheduling and TFRC operations is allocated to another cell that has a data requirement. This increases power utilization of an RRU and a cell throughput rate.

## Description

### TECHNICAL FIELD

The present invention relates to the field of communications technologies, and in particular, to cell power sharing method, cell power adjustment method, and a base station.

### BACKGROUND

In a Wideband Code Division Multiple Access (English: Wide-band Code Division Multiple Access, WCDMA for short) network, a transmit power of a cell is usually constrained by a hardware capability of a remote radio unit (English: Remote Radio Unit, RRU for short). When multiple cells share a same RRU, a commonly used practice is configuring a maximum transmit power for each cell. The sum of maximum transmit powers of the multiple cells is a maximum transmit power capability of the RRU shared by the multiple cells. In a subsequent data sending process, the cells are mutually independent. That is, an actual transmit power of each cell during data sending cannot exceed a maximum transmit power configured by a user for the cell.

To overcome a restriction of a maximum transmit power of a cell on an actual transmit power of the cell, the industry has implemented a periodic power sharing solution. In the periodic power sharing solution, an actual transmit power of a cell is not restricted by a maximum transmit power of the cell, but the sum of transmit powers of multiple cells sharing a same RRU still cannot exceed a maximum transmit power capability of the RRU. The periodic power sharing means adjustment of transmit powers of cells according to a power consumption status in a previous period.

However, the periodic power sharing solution is a pre-estimation solution, and estimation of a transmit power consumption status of cells in a next period according to a historical power consumption status may be inaccurate. When a network changes frequently, transmit powers of cells cannot be adjusted in a timely manner upon a real-time change of a network service. As a result, power utilization of an RRU is low, and service experience of a user and a cell throughput rate cannot be optimal.

### SUMMARY

Embodiments of the present invention provide cell power sharing and adjustment methods and a base station, so as to resolve a problem in the prior art that a transmit power of each cell cannot be adjusted in a timely manner upon a real-time change of a network service in a periodic power sharing solution.

According to a first aspect, an embodiment of the present invention provides a base station, including:
a collection unit, configured to collect service resource information of each cell of joint cells in a current period, where each cell of the joint cells belongs to the base station and shares a same RRU, and the service resource information is used to represent a resource available to the cell and a service feature of the cell; and
an allocation unit, configured to allocate a corresponding transmit power to each cell according to the service resource information of each cell, where the sum of transmit powers allocated to cells is a transmit power supported by the RRU.

With reference to the first aspect, in a first possible implementation of the first aspect, the service resource information includes at least one of the following:
a code word available to the cell, CQI information of scheduled UE, data caching information, a quantity of scheduled UEs, terminal type information of scheduled UE, or type information of a channel on which UE is located.

With reference to the first aspect or the first possible implementation of the first aspect, in a second possible implementation of the first aspect, the allocation unit is specifically configured to:
allocate a corresponding initial transmit power to each cell, where the sum of initial transmit powers allocated to the cells is the transmit power supported by the RRU;
determine a cached data amount of each cell according to the data caching information included in the service resource information of each cell; and
re-allocate an initial transmit power of a cell whose cached data amount is zero to a cell whose cached data amount is not zero.

With reference to the first aspect or the first possible implementation of the first aspect, in a third possible implementation of the first aspect, the allocation unit is specifically configured to:
for each cell, index, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and
allocate a corresponding transmit power to each cell according to the maximum transmit power requirement of each cell.

With reference to the first aspect or the first possible implementation of the first aspect, in a fourth possible implementation of the first aspect, the allocation unit is specifically configured to:
for each cell, index, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and determine power efficiency of the cell according to the maximum transmit power requirement of the cell; and
allocate a corresponding transmit power to each cell according to the power efficiency of each cell or according to the maximum transmit power requirement and the power efficiency of each cell.

According to a second aspect, an embodiment of the present invention provides a base station, including:
a selection unit, configured to select a cell from joint cells, where each cell of the joint cells belongs to the base station and shares a same RRU; and
a re-allocation unit, configured to: after cell scheduling and TFRC operations are completed on the selected cell, if it is determined that a transmit power allocated to the selected cell has a remainder, allocate a remaining transmit power of the selected cell to other unselected cells on which scheduling is not completed among the joint cells.

With reference to the second aspect, in a first possible implementation of the second aspect, when allocating the remaining transmit power of the selected cell to the other unselected cells on which scheduling is not completed among the joint cells, the re-allocation unit is specifically configured to:
allocate the remaining transmit power of the selected cell to another unselected cell that is to be scheduled next among the joint cells.

With reference to the second aspect, in a second possible implementation of the second aspect, when allocating the remaining transmit power of the selected cell to the other unselected cells on which scheduling is not completed among the joint cells, the re-allocation unit is specifically configured to:
collect service resource information, which is at a current moment, of each cell of the other unselected cells on which scheduling is not completed among the joint cells;
for each cell of the other unselected cells on which scheduling is not completed among the joint cells, index, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, where the remaining transmit power currently supported by the RRU is the sum of the remaining transmit power of the selected cell and initial transmit powers allocated to the other unselected cells on which scheduling is not completed; and
allocate, according to the maximum transmit power requirement of each cell of the other unselected cells on which scheduling is not completed among the joint cells, a corresponding transmit power to each cell of the other unselected cells on which scheduling is not completed among the joint cells.

With reference to the second aspect, in a third possible implementation of the second aspect, when allocating the remaining transmit power of the selected cell to the other unselected cells on which scheduling is not completed among the joint cells, the re-allocation unit is specifically configured to:
collect service resource information, which is at a current moment, of each cell of the other unselected cells on which scheduling is not completed among the joint cells;
for each cell of the other unselected cells on which scheduling is not completed among the joint cells, index, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determine power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed; and
allocate, according to the power efficiency of each cell of the other unselected cells on which scheduling is not completed among the joint cells, or according to the maximum transmit power requirement and the power efficiency of each cell of the other unselected cells on which scheduling is not completed among the joint cells, a corresponding transmit power to each cell of the other unselected cells on which scheduling is not completed among the joint cells.

With reference to any one of the second aspect, or the first to the third possible implementations of the second aspect, in a fourth possible implementation of the second aspect, the base station further includes:
a supplement unit, configured to: after scheduling and TFRC operations are completed on all cells of the joint cells, when it is determined that a transmit power of a last scheduled cell has a remainder and that a remaining hardware processing time of the base station meets a preset condition, perform cell scheduling and TFRC operations again on each cell whose cached data amount is not zero among the joint cells.

With reference to any one of the second aspect, or the first to the third possible implementations of the second aspect, in a fifth possible implementation of the second aspect, when selecting a cell from the joint cells, the selection unit is specifically configured to:
sort, according to a historical power usage status of each cell of the joint cells, each cell in descending order of historical remaining transmit power occurrences of each cell after completion of scheduling; and
successively select a cell from the joint cells according to a sorting result.

According to a third aspect, an embodiment of the present invention provides a cell power sharing method, including:
collecting, by a base station, service resource information of each cell of joint cells in a current period, where each cell of the joint cells belongs to the base station and shares a same RRU, and the service resource information is used to represent a resource available to the cell and a service feature of the cell; and
allocating, by the base station, a corresponding transmit power to each cell according to the service resource information of each cell, where the sum of transmit powers allocated to cells is a transmit power supported by the RRU.

With reference to the third aspect, in a first possible implementation of the third aspect, the service resource information includes at least one of the following:
a code word available to the cell, CQI information of scheduled UE, data caching information, a quantity of scheduled UEs, terminal type information of scheduled UE, or type information of a channel on which UE is located.

With reference to the third aspect or the first possible implementation of the third aspect, in a second possible implementation of the third aspect, the allocating, by the base station, a corresponding transmit power to each cell according to the service resource information of each cell includes:
allocating, by the base station, a corresponding initial transmit power to each cell, where the sum of initial transmit powers allocated to the cells is the transmit power supported by the RRU;
determining, by the base station, a cached data amount of each cell according to the data caching information included in the service resource information of each cell; and
re-allocating, by the base station, an initial transmit power of a cell whose cached data amount is zero to a cell whose cached data amount is not zero.

With reference to the third aspect or the first possible implementation of the third aspect, in a third possible implementation of the third aspect, the allocating, by the base station, a corresponding transmit power to each cell according to the service resource information of each cell includes:
for each cell, indexing, by the base station based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and
allocating, by the base station, a corresponding transmit power to each cell according to the maximum transmit power requirement of each cell.

With reference to the third aspect or the first possible implementation of the third aspect, in a fourth possible implementation of the third aspect, the allocating, by the base station, a corresponding transmit power to each cell according to the service resource information of each cell includes:
for each cell, indexing, by the base station based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and determining power efficiency of the cell according to the maximum transmit power requirement of the cell; and
allocating, by the base station, a corresponding transmit power to each cell according to the power efficiency of each cell or according to the maximum transmit power requirement and the power efficiency of each cell.

According to a fourth aspect, an embodiment of the present invention provides a cell power adjustment method, including:
selecting, by a base station, a cell from joint cells, where each cell of the joint cells belongs to the base station and shares a same RRU; and
after cell scheduling and TFRC operations are completed on the selected cell, if it is determined that a transmit power allocated to the selected cell has a remainder, allocating, by the base station, a remaining transmit power of the selected cell to other unselected cells on which scheduling is not completed among the joint cells.

With reference to the fourth aspect, in a first possible implementation of the fourth aspect, the allocating, by the base station, a remaining transmit power of the selected cell to other unselected cells on which scheduling is not completed among the joint cells includes:
allocating, by the base station, the remaining transmit power of the selected cell to another unselected cell that is to be scheduled next among the joint cells.

With reference to the fourth aspect, in a second possible implementation of the fourth aspect, the allocating, by the base station, a remaining transmit power of the selected cell to other unselected cells on which scheduling is not completed among the joint cells includes:
collecting, by the base station, service resource information, which is at a current moment, of each cell of other unselected cells on which scheduling is not completed among the joint cells;
for each cell of the other unselected cells on which scheduling is not completed among the joint cells, indexing, by the base station based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, where the remaining transmit power currently supported by the RRU is the sum of the remaining transmit power of the selected cell and initial transmit powers allocated to the other unselected cells on which scheduling is not completed; and
allocating, by the base station according to the maximum transmit power requirement of each cell of the other unselected cells on which scheduling is not completed among the joint cells, a corresponding transmit power to each cell of the other unselected cells on which scheduling is not completed among the joint cells.

With reference to the fourth aspect, in a third possible implementation of the fourth aspect, the allocating, by the base station, a remaining transmit power of the selected cell to other unselected cells on which scheduling is not completed among the joint cells includes:
collecting, by the base station, service resource information, which is at a current moment, of each cell of other unselected cells on which scheduling is not completed among the joint cells;
for each cell of the other unselected cells on which scheduling is not completed among the joint cells, indexing, by the base station based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determining power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed; and
allocating, by the base station according to the power efficiency of each cell of the other unselected cells on which scheduling is not completed among the joint cells, or according to the maximum transmit power requirement and the power efficiency of each cell of the other unselected cells on which scheduling is not completed among the joint cells, a corresponding transmit power to each cell of the other unselected cells on which scheduling is not completed among the joint cells.

With reference to any one of the fourth aspect, or the first to the third possible implementations of the fourth aspect, in a fourth possible implementation of the fourth aspect, the method further includes:
after scheduling and TFRC operations are completed on all cells of the joint cells, when determining that a transmit power of a last scheduled cell has a remainder and that a remaining hardware processing time of the base station meets a preset condition, performing, by the base station, cell scheduling and TFRC operations again on each cell whose cached data amount is not zero among the joint cells.

With reference to any one of the fourth aspect, or the first to the third possible implementations of the fourth aspect, in a fifth possible implementation of the fourth aspect, the selecting, by a base station, a cell from joint cells includes:
sorting, by the base station according to a historical power usage status of each cell of the joint cells, each cell in descending order of historical remaining transmit power occurrences of each cell after completion of scheduling; and
successively selecting, by the base station, a cell from the joint cells according to a sorting result.

By means of the solutions provided in the embodiments the present invention, a transmit power consumption status of each cell in a current period is estimated according to a specific service status of each cell in the current data transmission period, and further a transmit power of the cell is adaptively adjusted, so that a transmit power allocated to each cell can better adapt to a service requirement of the cell. This increases a cell throughput rate. In addition, by means of the solutions provided in the embodiments of the present invention, a remaining transmit power of each cell after completion of cell scheduling and TFRC operations is allocated to another cell that has a data requirement. This increases power utilization of an RRU and a cell throughput rate.

### BRIEF DESCRIPTION OF DRAWINGS

FIG 1 is a schematic structural diagram of a base station for implementing power sharing among cells according to an embodiment of the present invention;
FIG. 2 is a schematic structural diagram of a base station for implementing power re-allocation among cells according to an embodiment of the present invention;
FIG. 3 is a schematic structural diagram of another base station for implementing power sharing among cells according to an embodiment of the present invention;
FIG. 4 is a schematic structural diagram of another base station for implementing power re-allocation among cells according to an embodiment of the present invention;
FIG 5 is a flowchart of a cell power sharing method according to an embodiment of the present invention; and
FIG. 6 is a flowchart of a cell power adjustment method according to an embodiment of the present invention.

### DESCRIPTION OF EMBODIMENTS

Embodiments of the present invention provide a cell power sharing method and a base station. A transmit power consumption status of each cell in a current period is estimated according to a specific service status of each cell in the current data transmission period, and further a transmit power of the cell is adaptively adjusted, so that a transmit power allocated to each cell can better adapt to a service requirement of the cell. This increases a cell throughput rate.

Embodiments of the present invention further provide a cell power adjustment method and a base station. A remaining transmit power of each cell after completion of cell scheduling and transport format resource combination (English: Transmission Format Resource Combination, TFRC for short) operations is allocated to another cell that has a data requirement. This increases power utilization of an RRU and a cell throughput rate.

It should be noted that, although the embodiments of the present invention are described based on a WCDMA network standard, after proper modifications and variations, a method proposed in the present invention for performing cell power pre-allocation based on a specific service status of each cell in a current data transmission period and allocating a remaining transmit power of each cell after completion of cell scheduling to another cell that needs to cache data may still be applicable to other network standards, such as a 2nd generation mobile telecommunications (English: 2nd Generation, 2G for short) system, another 3rd generation mobile telecommunications (English: 3nd Generation, 3G for short) system, and a Long Term Evolution (Long Term Evolution, LTE) system.

The following describes the technical solutions of the present invention with reference to the accompanying drawings and the embodiments of the specification.

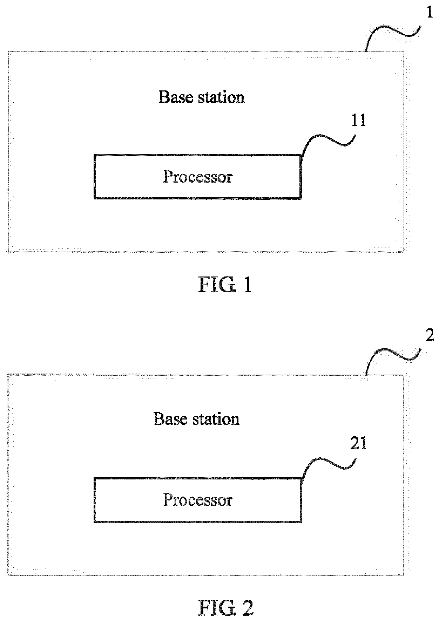

Referring to FIG. 1, an embodiment of the present invention provides a base station 1, configured to implement power sharing among cells. The base station 1 includes:
a processor 11, configured to: collect service resource information of each cell of joint cells in a current period, where each cell of the joint cells belongs to the base station and shares a same RRU, and the service resource information is used to represent a resource available to the cell and a service feature of the cell; and allocate a corresponding transmit power to each cell according to the service resource information of each cell, where the sum of transmit powers allocated to cells is a transmit power supported by the RRU.

Optionally, the service resource information includes at least one of the following: a code word available to the cell, channel quality indicator (English: Channel Quality Indicator, CQI for short) information of scheduled user equipment (English: User Equipment, UE for short), data caching information, a quantity of scheduled UEs, terminal type information of scheduled UE, or type information of a channel on which UE is located.

Optionally, a manner in which the processor 11 allocates a corresponding transmit power to each cell according to the service resource information of each cell may include but is not limited to the following four allocation manners:

### Manner 1

The processor 11 allocates a corresponding initial transmit power to each cell, where the sum of initial transmit powers allocated to the cells is the transmit power supported by the RRU; determines a cached data amount of each cell according to the data caching information included in the service resource information of each cell; and then re-allocates an initial transmit power of a cell whose cached data amount is zero to a cell whose cached data amount is not zero.

### Manner 2

For each cell, the processor 11 indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and allocates a corresponding transmit power to each cell according to the maximum transmit power requirement of each cell.

### Manner 3

For each cell, the processor 11 indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU, and determines power efficiency of the cell according to the maximum transmit power requirement of the cell; and then allocates a corresponding transmit power to each cell according to the power efficiency of each cell.

### Manner 4

For each cell, the processor 11 indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU, and determines power efficiency of the cell according to the maximum transmit power requirement of the cell; and then allocates a corresponding transmit power to each cell according to the maximum transmit power requirement and the power efficiency of each cell.

Referring to FIG. 2, an embodiment of the present invention provides a base station 2, configured to implement power re-allocation among cells. The base station 2 includes:
a processor 21, configured to: select a cell from joint cells, where each cell of the joint cells belongs to the base station and shares a same RRU; and after cell scheduling and TFRC operations are completed on the selected cell, if it is determined that a transmit power allocated to the selected cell has a remainder, allocate a remaining transmit power of the selected cell to other unselected cells on which scheduling is not completed among the joint cells.

Optionally, a manner in which the base station allocates the remaining transmit power of the selected cell to the other unselected cells on which scheduling is not completed among the joint cells may include but is not limited to the following four allocation manners:

### Manner 1

The processor 21 allocates the remaining transmit power of the selected cell to another unselected cell that is to be scheduled next among the joint cells.

### Manner 2

The processor 21 collects service resource information, which is at a current moment, of each cell of the other unselected cells on which scheduling is not completed among the joint cells; and for each cell of the other unselected cells on which scheduling is not completed among the joint cells, indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, where the remaining transmit power currently supported by the RRU is the sum of the remaining transmit power of the selected cell and initial transmit powers allocated to the other unselected cells on which scheduling is not completed; and then allocates, according to the maximum transmit power requirement of each cell of the other unselected cells on which scheduling is not completed among the joint cells, a corresponding transmit power to each cell of the other unselected cells on which scheduling is not completed among the joint cells.

### Manner 3

The processor 21 collects service resource information, which is at a current moment, of each cell of other unselected cells on which scheduling is not completed among the joint cells; and for each cell of the other unselected cells on which scheduling is not completed among the joint cells, indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determines power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed; and then allocates, according to the power efficiency of each cell of the other unselected cells on which scheduling is not completed among the joint cells, a corresponding transmit power to each cell of the other unselected cells on which scheduling is not completed among the joint cells.

### Manner 4

The processor 21 collects service resource information, which is at a current moment, of each cell of other unselected cells on which scheduling is not completed among the joint cells; and for each cell of the other unselected cells on which scheduling is not completed among the joint cells, indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determines power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed; and then allocates, according to the maximum transmit power requirement and the power efficiency of each cell of the other unselected cells on which scheduling is not completed among the joint cells, a corresponding transmit power to each cell of the other unselected cells on which scheduling is not completed among the joint cells.

Optionally, the processor 21 is further configured to: after scheduling and TFRC operations are completed on all cells of the joint cells, when it is determined that a transmit power of a last scheduled cell has a remainder and that a remaining hardware processing time of the base station meets a preset condition, perform cell scheduling and TFRC operations again on each cell whose cached data amount is not zero among the joint cells.

Optionally, when selecting a cell from the joint cells, the selection unit 21 is specifically configured to: sort, according to a historical power usage status of each cell of the joint cells, each cell in descending order of historical remaining transmit power occurrences of each cell after completion of scheduling; and successively select a cell from the joint cells according to a sorting result.

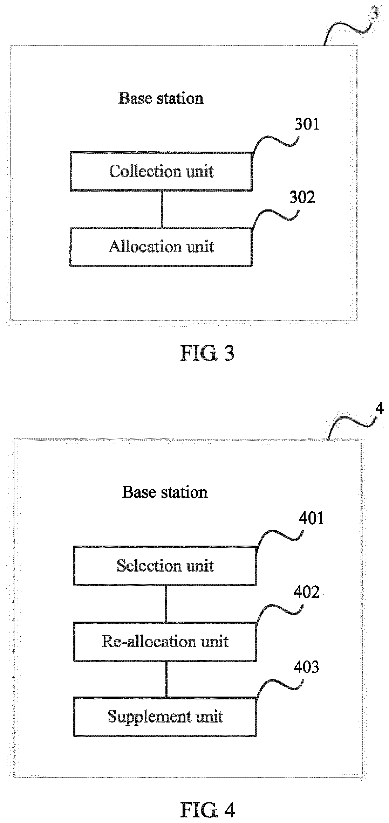

Referring to FIG. 3, an embodiment of the present invention provides a base station 3, configured to implement power sharing among cells. The base station 3 includes:
a collection unit 301, configured to collect service resource information of each cell of joint cells in a current period, where each cell of the joint cells belongs to the base station and shares a same RRU, and the service resource information is used to represent a resource available to the cell and a service feature of the cell; and
an allocation unit 302, configured to allocate a corresponding transmit power to each cell according to the service resource information of each cell, where the sum of transmit powers allocated to cells is a transmit power supported by the RRU.

Optionally, the service resource information includes at least one of the following: a code word available to the cell, CQI information of scheduled UE, data caching information, a quantity of scheduled UEs, terminal type information of scheduled UE, or type information of a channel on which UE is located.

Optionally, a manner in which the allocation unit 302 allocates a corresponding transmit power to each cell according to the service resource information of each cell may include but is not limited to the following four allocation manners:

### Manner 1

The allocation unit 302 allocates a corresponding initial transmit power to each cell, where the sum of initial transmit powers allocated to the cells is the transmit power supported by the RRU; determines a cached data amount of each cell according to the data caching information included in the service resource information of each cell; and then re-allocates an initial transmit power of a cell whose cached data amount is zero to a cell whose cached data amount is not zero.

### Manner 2

For each cell, the allocation unit 302 indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and allocates a corresponding transmit power to each cell according to the maximum transmit power requirement of each cell.

### Manner 3

For each cell, the allocation unit 302 indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU, and determines power efficiency of the cell according to the maximum transmit power requirement of the cell; and then allocates a corresponding transmit power to each cell according to the power efficiency of each cell or according to the maximum transmit power requirement and the power efficiency of each cell.

### Manner 4

For each cell, the allocation unit 302 indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU, and determines power efficiency of the cell according to the maximum transmit power requirement of the cell; and then allocates a corresponding transmit power to each cell according to the maximum transmit power requirement and the power efficiency of each cell.

Referring to FIG. 4, an embodiment of the present invention provides a base station 4, configured to implement power re-allocation among cells. The base station 4 includes:
a selection unit 401, configured to select a cell from joint cells, where each cell of the joint cells belongs to the base station and shares a same RRU; and
a re-allocation unit 402, configured to: after cell scheduling and TFRC operations are completed on the selected cell, if it is determined that a transmit power allocated to the selected cell has a remainder, allocate a remaining transmit power of the selected cell to other unselected cells on which scheduling is not completed among the joint cells.

Optionally, a manner in which the base station allocates the remaining transmit power of the selected cell to the other unselected cells on which scheduling is not completed among the joint cells may include but is not limited to the following four allocation manners:

### Manner 1

The re-allocation unit 402 allocates the remaining transmit power of the selected cell to another unselected cell that is to be scheduled next among the joint cells.

### Manner 2

The re-allocation unit 402 collects service resource information, which is at a current moment, of each cell of other unselected cells on which scheduling is not completed among the joint cells; and for each cell of the other unselected cells on which scheduling is not completed among the joint cells, indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, where the remaining transmit power currently supported by the RRU is the sum of the remaining transmit power of the selected cell and initial transmit powers allocated to the other unselected cells on which scheduling is not completed; and then allocates, according to the maximum transmit power requirement of each cell of the other unselected cells on which scheduling is not completed among the joint cells, a corresponding transmit power to each cell of the other unselected cells on which scheduling is not completed among the joint cells.

### Manner 3

The re-allocation unit 402 collects service resource information, which is at a current moment, of each cell of other unselected cells on which scheduling is not completed among the joint cells; and for each cell of the other unselected cells on which scheduling is not completed among the joint cells, indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determines power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed; and then allocates, according to the power efficiency of each cell of the other unselected cells on which scheduling is not completed among the joint cells, a corresponding transmit power to each cell of the other unselected cells on which scheduling is not completed among the joint cells.

### Manner 4

The re-allocation unit 402 collects service resource information, which is at a current moment, of each cell of other unselected cells on which scheduling is not completed among the joint cells; and for each cell of the other unselected cells on which scheduling is not completed among the joint cells, indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determines power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed; and then allocates, according to the maximum transmit power requirement and the power efficiency of each cell of the other unselected cells on which scheduling is not completed among the joint cells, a corresponding transmit power to each cell of the other unselected cells on which scheduling is not completed among the joint cells.

Optionally, the base station 4 further includes:
a supplement unit 403, configured to: after scheduling and TFRC operations are completed on all cells of the joint cells, when it is determined that a transmit power of a last scheduled cell has a remainder and that a remaining hardware processing time of the base station meets a preset condition, perform cell scheduling and TFRC operations again on each cell whose cached data amount is not zero among the joint cells.

Optionally, when selecting a cell from the joint cells, the selection unit 401 is specifically configured to: sort, according to a historical power usage status of each cell of the joint cells, each cell in descending order of historical remaining transmit power occurrences of each cell after completion of scheduling; and successively select a cell from the joint cells according to a sorting result.

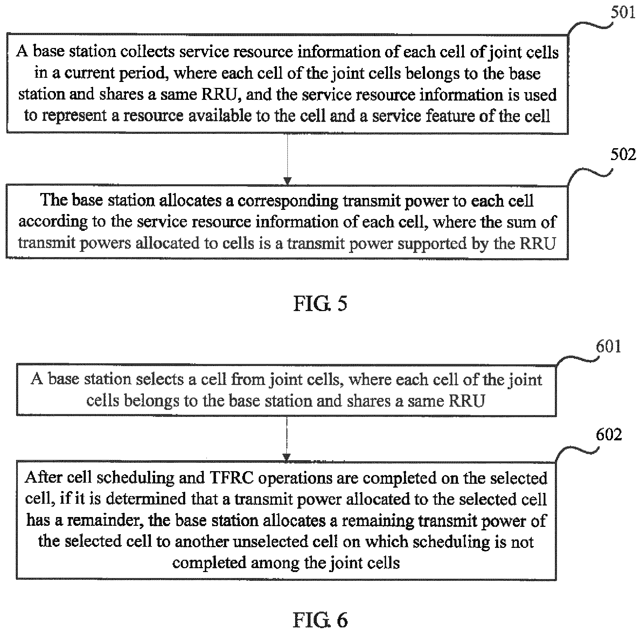

Referring to FIG. 5, an embodiment of the present invention provides a cell power sharing method. An implementation procedure of the method is as follows.

Step 501: A base station collects service resource information of each cell of joint cells in a current period, where each cell of the joint cells belongs to the base station and shares a same RRU, and the service resource information is used to represent a resource available to the cell and a service feature of the cell.

The period may be a transmission time interval (English: Transmission time Interval, TTI for short) defined in a wireless communications protocol, and may be 2 milliseconds (unit: ms) or an integer multiple of 2 ms.

The service resource information includes at least one of the following: a code word available to the cell, CQI information of scheduled UE, data caching information, a quantity of scheduled UEs, terminal type information of scheduled UE, or type information of a channel on which UE is located. The code word available to the cell may be used to differentiate communications of the cell. The CQI information is a channel measurement criterion for measuring a given channel. Generally, a CQI with a larger value indicates a channel with higher quality, and vice versa. The data caching information is used to represent a data amount to be sent on a cell side. The terminal type information is used to represent a maximum data sending capability of UE, and may include capability information such as a category (English: Category) of UE, for example, category4 and category3. A rate of category4 is 50 Mbps higher than that of category3. The type information of the channel on which UE is located may include an additive white Gaussian noise (English: Additive White Gaussian Noise, AWGN for short) channel, a PA (English: Pedestrian A) channel, a PB (English: Pedestrian B) channel, a VA30 (English: Vehicular 30) channel, or a VA120 (English: Vehicular 120) channel.

Step 502: The base station allocates a corresponding transmit power to each cell according to the service resource information of each cell, where the sum of transmit powers allocated to cells is a transmit power supported by the RRU.

Optionally, a manner in which the base station allocates a corresponding transmit power to each cell according to the service resource information of each cell may include but is not limited to the following four allocation manners:

### Manner 1

First, the base station allocates a corresponding initial transmit power to each cell, where the sum of initial transmit powers allocated to the cells is the transmit power supported by the RRU.

The transmit power supported by the RRU herein is a transmit power allowed by the RRU, and related to a quantity of power resources purchased by a telecommunications operator, and may be up to a maximum transmit power supported by the RRU.

A manner in which the base station allocates an initial transmit power to each cell may be: allocating the transmit power supported by the RRU evenly to each cell, or may be: performing power allocation according to a size of a cached data amount of each cell or according to quality of a channel on which the cell is located, or the like.

Second, the base station determines a cached data amount of each cell according to the data caching information included in the service resource information of each cell.

Then, the base station re-allocates an initial transmit power of a cell whose cached data amount is zero to a cell whose cached data amount is not zero. Herein, for a manner in which the base station re-allocates a transmit power, refer to a manner in which the base station allocates an initial transmit power.

### Manner 2

For each cell, the base station indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and allocates a corresponding transmit power to each cell according to the maximum transmit power requirement of each cell.

For example, the base station may proportionally allocate a transmit power according to the maximum transmit power requirement of each cell, and a higher transmit power is allocated to a cell that has a higher transmit power requirement.

Herein, the preset mapping relationship between a maximum cell transmit power requirement, and cell service resource information and a maximum available cell transmit power is a TFRC table in a WCDMA standard.

### Manner 3

For each cell, the base station indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU, and determines power efficiency of the cell according to the maximum transmit power requirement of the cell; and then allocates a corresponding transmit power to each cell according to the power efficiency of each cell.

For example, the base station may proportionally allocate a transmit power according to the power efficiency of each cell, and a higher transmit power is allocated to a cell that has higher power efficiency.

In a WCDMA standard, power efficiency of a cell may be obtained in the following manner: A maximum transmit power required by the cell and a maximum data amount that can be sent at the maximum transmit power are obtained by searching a TFRC table and according to the maximum transmit power requirement corresponding to both the current service resource information of the cell and the transmit power supported by the RRU, and a ratio of the maximum data amount to the maximum transmit power is the power efficiency of the cell.

For example, assuming that a cell 1 and a cell 2 share one RRU, if it is learned, by searching a TFRC table, that maximum data amounts that can be sent by the cell 1 and the cell 2 are respectively X and Y when maximum transmit powers matching maximum transmit power requirements of the cell 1 and the cell 2 are respectively configured for the cell 1 and the cell 2, X/(X+Y) of a total transmit power supported by the RRU may be allocated to the cell 1, and Y/(X+Y) of the total transmit power supported by the RRU may be allocated to the cell 2.

### Manner 4

For each cell, the base station indexes, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU, and determines power efficiency of the cell according to the maximum transmit power requirement of the cell; and then allocates a corresponding transmit power to each cell according to the maximum transmit power requirement and the power efficiency of each cell.

For example, assuming that a cell 1 and a cell 2 share one RRU, if it is learned, by searching a TFRC table, that maximum data amounts that can be sent by the cell 1 and the cell 2 are respectively X and Y when maximum transmit powers matching maximum transmit power requirements of the cell 1 and the cell 2 are respectively configured for the cell 1 and the cell 2, a smaller value may be selected from the maximum transmit power requirement of the cell 1 and X/(X+Y) of a total transmit power supported by the RRU and used as a transmit power allocated to the cell 1; likewise, a smaller value may be selected from the maximum transmit power requirement of the cell 2 and Y/(X+Y) of the total transmit power supported by the RRU and used a transmit power allocated to the cell 2.

It should be noted that when computing resources of the base station are relatively strained, a relatively simple transmit power allocation manner, for example, Manner 1, may be used. However, when computing resources of the base station are relatively sufficient, a more complex and effective transmit power allocation manner, for example, Manner 2, Manner 3, or Manner 4, may be used. The computing resources of the base station may be utilization of a central processing unit (English: Central Processing Unit, CPU for short) of the base station.

In addition, an embodiment of the present invention provides a cell power adjustment method. It should be noted that the cell power adjustment method provided in the present invention is not limited to the foregoing cell power sharing method proposed in the foregoing embodiment of the present invention. Referring to FIG 6, an implementation procedure of the method is as follows.

Step 601: A base station selects a cell from joint cells, where each cell of the joint cells belongs to the base station and shares a same RRU.

Step 602: After cell scheduling and TFRC operations are completed on the selected cell, if it is determined that a transmit power allocated to the selected cell has a remainder, the base station allocates a remaining transmit power of the selected cell to other unselected cells on which scheduling is not completed among the joint cells.

Optionally, a manner in which the base station allocates the remaining transmit power of the selected cell to the other unselected cells on which scheduling is not completed among the joint cells may include but is not limited to the following four allocation manners:

### Manner 1

The base station allocates the remaining transmit power of the selected cell to another unselected cell that is to be scheduled next among the joint cells.

### Manner 2

First, the base station collects service resource information, which is at a current moment, of each cell of other unselected cells on which scheduling is not completed among the joint cells.

The service resource information includes at least one of the following: a code word available to the cell, CQI information of scheduled UE, data caching information, a quantity of scheduled UEs, terminal type information of scheduled UE, or type information of a channel on which UE is located.

Second, for each cell of the other unselected cells on which scheduling is not completed among the joint cells, the base station indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, where the remaining transmit power currently supported by the RRU is the sum of the remaining transmit power of the selected cell and initial transmit powers allocated to the other unselected cells on which scheduling is not completed.

Then, the base station allocates, according to the maximum transmit power requirement of each cell of the other unselected cells on which scheduling is not completed among the joint cells, a corresponding transmit power to each cell of the other unselected cells on which scheduling is not completed among the joint cells.

Herein, for an implementation process of performing, by the base station, power allocation according to a maximum transmit power requirement of a cell, refer to the allocation manner 2 in the foregoing step 502.

### Manner 3

First, the base station collects service resource information, which is at a current moment, of each cell of other unselected cells on which scheduling is not completed among the joint cells.

Second, for each cell of the other unselected cells on which scheduling is not completed among the joint cells, the base station indexes, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determines power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed.

Then, the base station allocates, according to the power efficiency of each cell of the other unselected cells on which scheduling is not completed among the joint cells, a corresponding transmit power to each cell of the other unselected cells on which scheduling is not completed among the joint cells.

Herein, for an implementation process of performing, by the base station, power allocation according to power efficiency of a cell, refer to the allocation manner 3 in the foregoing step 502.

### Manner 4

First, the base station collects service resource information, which is at a current moment, of each cell of other unselected cells on which scheduling is not completed among the joint cells.

Second, for each cell of the other unselected cells on which scheduling is not completed among the joint cells, the base station indexes, based on a preset mapping relationship between a maximum cell transmit power requirement, and cell service resource information and a maximum available cell transmit power, a maximum transmit power requirement corresponding to both the service resource information of the cell in a current period and a remaining transmit power currently supported by the RRU, and determines power efficiency of the cell according to the maximum transmit power requirement of the cell, where the remaining transmit power currently supported by the RRU is the sum of the remaining transmit power of the selected cell and initial transmit powers allocated to the other unselected cells on which scheduling is not completed.

Then, the base station allocates, according to the maximum transmit power requirement and the power efficiency of each cell of the other unselected cells on which scheduling is not completed among the joint cells, a corresponding transmit power to each cell of the other unselected cells on which scheduling is not completed among the joint cells.

Herein, for an implementation process of performing, by the base station, power allocation according to a maximum transmit power requirement and power efficiency of a cell, refer to the allocation manner 4 in the foregoing step 502.

It should be noted that when computing resources of the base station are relatively strained, a relatively simple transmit power re-allocation manner, for example, Manner 1, may be used. However, when computing resources of the base station are relatively sufficient, a more complex and effective transmit power re-allocation manner, for example, Manner 2, Manner 3, or Manner 4, may be used. The computing resources of the base station may be utilization of a CPU of the base station.

Optionally, after the base station completes scheduling and TFRC operations on all cells of the joint cells, when the base station determines that a transmit power of a last scheduled cell has a remainder and that a remaining hardware processing time of the base station meets a preset condition (that is, the remaining hardware processing time is abundant), the base station may perform cell scheduling and TFRC operations again on each cell whose cached data amount is not zero among the joint cells. For a specific implementation process, refer to steps 501 and 502 and steps 601 and 602. When the base station determines that a transmit power of the last scheduled cell has no remainder or that a remaining hardware processing time of the base station does not meet a preset condition (that is, the remaining hardware processing time is not abundant), the base station does not perform a power supplement process.

The base station selects a cell from the joint cells according to a scheduling sequence, and successively performs cell scheduling and TFRC operations. Therefore, to improve efficiency of implementing the solution, when selecting a cell from the joint cells, the base station may sort, according to a historical power usage status of each cell of the joint cells, each cell in descending order of historical remaining transmit power occurrences of each cell after completion of scheduling, and successively select a cell from the joint cells according to a sorting result. Generally, each cell needs to have an opportunity to be scheduled. Therefore, cells that may have a remaining transmit power are scheduled first, and remaining transmit powers of these cells may be directly re-allocated to other cells for use. This improves transmit power re-allocation efficiency.

In conclusion, in the technical solution of cell power sharing provided in this embodiment of the present invention, a transmit power consumption status of each cell in the current period is estimated according to a specific service status of each cell in a current data transmission period, and further a transmit power of the cell is adaptively adjusted, so that a transmit power allocated to each cell can better adapt to a service requirement of the cell. This increases a cell throughput rate. In addition, in the technical solution of cell power adjustment provided in this embodiment of the present invention, a remaining transmit power of each cell after completion of cell scheduling and TFRC operations is allocated to another cell that needs to cache data, and a remaining transmit power after completion of the first round of cell scheduling and TFRC operations is allocated, as a supplement, to another cell that still needs to cache data. A supplemented transmit power is used by means of secondary cell scheduling and TFRC operations. This increases power utilization of an RRU and a cell throughput rate.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Apparently, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A base station, comprising:
a collection unit, configured to collect service resource information of each cell of joint cells in a current period, wherein each cell of the joint cells belongs to the base station and shares a same remote radio unit RRU, and the service resource information is used to represent a resource available to the cell and a service feature of the cell; and
an allocation unit, configured to allocate a corresponding transmit power to each cell according to the service resource information of each cell, wherein the sum of transmit powers allocated to cells is a transmit power supported by the RRU.

2. The base station according to claim 1, wherein the service resource information comprises at least one of the following:
a code word available to the cell, channel quality indicator CQI information of scheduled user equipment UE, data caching information, a quantity of scheduled UEs, terminal type information of scheduled UE, or type information of a channel on which UE is located.

3. The base station according to claim 1 or 2, wherein the allocation unit is specifically configured to:
allocate a corresponding initial transmit power to each cell, wherein the sum of initial transmit powers allocated to the cells is the transmit power supported by the RRU;
determine a cached data amount of each cell according to the data caching information comprised in the service resource information of each cell; and
re-allocate an initial transmit power of a cell whose cached data amount is zero to a cell whose cached data amount is not zero.

4. The base station according to claim 1 or 2, wherein the allocation unit is specifically configured to:
for each cell, index, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and
allocate a corresponding transmit power to each cell according to the maximum transmit power requirement of each cell.

5. The base station according to claim 1 or 2, wherein the allocation unit is specifically configured to:
for each cell, index, based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and determine power efficiency of the cell according to the maximum transmit power requirement of the cell; and
allocate a corresponding transmit power to each cell according to the power efficiency of each cell or according to the maximum transmit power requirement and the power efficiency of each cell.

6. A base station, comprising:
a selection unit, configured to select a cell from joint cells, wherein each cell of the joint cells belongs to the base station and shares a same remote radio unit RRU; and
a re-allocation unit, configured to: after cell scheduling and transport format resource combination TFRC operations are completed on the selected cell, if it is determined that a transmit power allocated to the selected cell has a remainder, allocate a remaining transmit power of the selected cell to other unselected cells on which scheduling is not completed among the joint cells.

7. The base station according to claim 6, wherein when allocating the remaining transmit power of the selected cell to the other unselected cells on which scheduling is not completed among the joint cells, the re-allocation unit is specifically configured to:
allocate the remaining transmit power of the selected cell to another unselected cell that is to be scheduled next among the joint cells.

8. The base station according to claim 6, wherein when allocating the remaining transmit power of the selected cell to the other unselected cells on which scheduling is not completed among the joint cells, the re-allocation unit is specifically configured to:
collect service resource information, which is at a current moment, of each cell of the other unselected cells on which scheduling is not completed among the joint cells;
for each cell of the other unselected cells on which scheduling is not completed among the joint cells, index, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, wherein the remaining transmit power currently supported by the RRU is the sum of the remaining transmit power of the selected cell and initial transmit powers allocated to the other unselected cells on which scheduling is not completed; and
allocate, according to the maximum transmit power requirement of each cell of the other unselected cells on which scheduling is not completed among the joint cells, a corresponding transmit power to each cell of the other unselected cells on which scheduling is not completed among the joint cells.

9. The base station according to claim 6, wherein when allocating the remaining transmit power of the selected cell to the other unselected cells on which scheduling is not completed among the joint cells, the re-allocation unit is specifically configured to:
collect service resource information, which is at a current moment, of each cell of the other unselected cells on which scheduling is not completed among the joint cells;
for each cell of the other unselected cells on which scheduling is not completed among the joint cells, index, based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determine power efficiency of the cell according to the maximum transmit power requirement of the cell, wherein the remaining transmit power currently supported by the RRU is the sum of the remaining transmit power of the selected cell and initial transmit powers allocated to the other unselected cells on which scheduling is not completed; and
allocate, according to the power efficiency of each cell of the other unselected cells on which scheduling is not completed among the joint cells, or according to the maximum transmit power requirement and the power efficiency of each cell of the other unselected cells on which scheduling is not completed among the joint cells, a corresponding transmit power to each cell of the other unselected cells on which scheduling is not completed among the joint cells.

10. The base station according to any one of claims 6 to 9, wherein the base station further comprises:
a supplement unit, configured to: after scheduling and TFRC operations are completed on all cells of the joint cells, when it is determined that a transmit power of a last scheduled cell has a remainder and that a remaining hardware processing time of the base station meets a preset condition, perform cell scheduling and TFRC operations again on each cell whose cached data amount is not zero among the joint cells.

11. The base station according to any one of claims 6 to 9, wherein when selecting a cell from the joint cells, the selection unit is specifically configured to:
sort, according to a historical power usage status of each cell of the joint cells, each cell in descending order of historical remaining transmit power occurrences of each cell after completion of scheduling; and
successively select a cell from the joint cells according to a sorting result.

12. A cell power sharing method, comprising:
collecting, by a base station, service resource information of each cell of joint cells in a current period, wherein each cell of the joint cells belongs to the base station and shares a same remote radio unit RRU, and the service resource information is used to represent a resource available to the cell and a service feature of the cell; and
allocating, by the base station, a corresponding transmit power to each cell according to the service resource information of each cell, wherein the sum of transmit powers allocated to cells is a transmit power supported by the RRU.

13. The method according to claim 12, wherein the service resource information comprises at least one of the following:
a code word available to the cell, channel quality indicator CQI information of scheduled user equipment UE, data caching information, a quantity of scheduled UEs, terminal type information of scheduled UE, or type information of a channel on which UE is located.

14. The method according to claim 12 or 13, wherein the allocating, by the base station, a corresponding transmit power to each cell according to the service resource information of each cell comprises:
allocating, by the base station, a corresponding initial transmit power to each cell, wherein the sum of initial transmit powers allocated to the cells is the transmit power supported by the RRU;
determining, by the base station, a cached data amount of each cell according to the data caching information comprised in the service resource information of each cell; and
re-allocating, by the base station, an initial transmit power of a cell whose cached data amount is zero to a cell whose cached data amount is not zero.

15. The method according to claim 12 or 13, wherein the allocating, by the base station, a corresponding transmit power to each cell according to the service resource information of each cell comprises:
for each cell, indexing, by the base station based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and
allocating, by the base station, a corresponding transmit power to each cell according to the maximum transmit power requirement of each cell.

16. The method according to claim 12 or 13, wherein the allocating, by the base station, a corresponding transmit power to each cell according to the service resource information of each cell comprises:
for each cell, indexing, by the base station based on a preset mapping relationship between a maximum cell transmit power requirement, and cell service resource information and a maximum available cell transmit power, a maximum transmit power requirement corresponding to both the service resource information of the cell in the current period and the transmit power supported by the RRU; and determining power efficiency of the cell according to the maximum transmit power requirement of the cell; and
allocating, by the base station, a corresponding transmit power to each cell according to the power efficiency of each cell or according to the maximum transmit power requirement and the power efficiency of each cell.

17. A cell power adjustment method, comprising:
selecting, by a base station, a cell from joint cells, wherein each cell of the joint cells belongs to the base station and shares a same remote radio unit RRU; and
after cell scheduling and transport format resource combination TFRC operations are completed on the selected cell, if it is determined that a transmit power allocated to the selected cell has a remainder, allocating, by the base station, a remaining transmit power of the selected cell to other unselected cells on which scheduling is not completed among the joint cells.

18. The method according to claim 17, wherein the allocating, by the base station, a remaining transmit power of the selected cell to other unselected cells on which scheduling is not completed among the joint cells comprises:
allocating, by the base station, the remaining transmit power of the selected cell to another unselected cell that is to be scheduled next among the joint cells.

19. The method according to claim 17, wherein the allocating, by the base station, a remaining transmit power of the selected cell to other unselected cells on which scheduling is not completed among the joint cells comprises:
collecting, by the base station, service resource information, which is at a current moment, of each cell of other unselected cells on which scheduling is not completed among the joint cells;
for each cell of the other unselected cells on which scheduling is not completed among the joint cells, indexing, by the base station based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, wherein the remaining transmit power currently supported by the RRU is the sum of the remaining transmit power of the selected cell and initial transmit powers allocated to the other unselected cells on which scheduling is not completed; and
allocating, by the base station according to the maximum transmit power requirement of each cell of the other unselected cells on which scheduling is not completed among the joint cells, a corresponding transmit power to each cell of the other unselected cells on which scheduling is not completed among the joint cells.

20. The method according to claim 17, wherein the allocating, by the base station, a remaining transmit power of the selected cell to other unselected cells on which scheduling is not completed among the joint cells comprises:
collecting, by the base station, service resource information, which is at a current moment, of each cell of other unselected cells on which scheduling is not completed among the joint cells;
for each cell of the other unselected cells on which scheduling is not completed among the joint cells, indexing, by the base station based on a preset mapping relationship between a maximum cell transmit power requirement, and cell service resource information and a maximum available cell transmit power, a maximum transmit power requirement corresponding to both the service resource information of the cell at the current moment and a remaining transmit power currently supported by the RRU, and determining power efficiency of the cell according to the maximum transmit power requirement of the cell, wherein the remaining transmit power currently supported by the RRU is the sum of the remaining transmit power of the selected cell and initial transmit powers allocated to the other unselected cells on which scheduling is not completed; and
allocating, by the base station according to the power efficiency of each cell of the other unselected cells on which scheduling is not completed among the joint cells, or according to the maximum transmit power requirement and the power efficiency of each cell of the other unselected cells on which scheduling is not completed among the joint cells, a corresponding transmit power to each cell of the other unselected cells on which scheduling is not completed among the joint cells.

21. The method according to any one of claims 17 to 20, further comprising:
after scheduling and TFRC operations are completed on all cells of the joint cells, when determining that a transmit power of a last scheduled cell has a remainder and that a remaining hardware processing time of the base station meets a preset condition, performing, by the base station, cell scheduling and TFRC operations again on each cell whose cached data amount is not zero among the joint cells.

22. The method according to any one of claims 17 to 20, wherein the selecting, by a base station, a cell from joint cells comprises:
sorting, by the base station according to a historical power usage status of each cell of the joint cells, each cell in descending order of historical remaining transmit power occurrences of each cell after completion of scheduling; and
successively selecting, by the base station, a cell from the joint cells according to a sorting result.
